# EUROPÄISCHE PATENTSCHRIFT

(11) **EP 0 796 015 B1**
(45) Veröffentlichungstag und Bekanntmachung des Hinweises auf die Patenterteilung: **18.12.2002**
(21) Anmeldenummer: 97400566.2
(22) Anmeldetag: 14.03.1997
(51) Int. Cl.: H04N 7/26

(54) **Einrichtung und Dienst zur Übertragung von Videobilddaten sowie Einrichtung von Anforderungssignalen**
Device and service for transmitting video image data and request signals device
Dispositif et service de transmission de données d'images vidéo et dispositif de signaux de requête

(30) Priorität: 14.03.1996 DE 19610010
(43) Veröffentlichungstag der Anmeldung: 17.09.1997
(73) Patentinhaber: ALCATEL, 75008 Paris (FR)
(72) Erfinder: Peters, Wolfgang, Dr., 71732 Tamm (DE); Schneider, Gerhard, 71229 Leonberg (DE)
(74) Vertreter: Schätzle, Albin, Dipl.-Phys.

(56) Entgegenhaltungen:
- EP-A- 0 498 649
- EP-A- 0 632 658
- DE-A- 3 820 425
- DE-A- 4 443 910
- DE-A- 19 524 704

## Beschreibung

Die Erfindung betrifft eine Einrichtung zur Übertragung von Videobilddaten bzw. Anforderungssignalen.

Aus EP 0632658 ist ein Videokonferenzsystem bekannt, bei dem eine Einrichtung zur Übertragung von Videobilddaten in ein Übertragungsnetz vorgesehen ist, beinhaltend eine Sendeeinheit zur Übertragung der Videobilddaten über eine Wahlverbindung, eine Empfangseinheit zum Empfang von Anforderungssignalen aus dem Übertragungsnetz und eine Kodiereinheit zur Kodierung der zu übertragenden Videobilddaten auf wenigstens zwei unterschiedliche Kodierungsarten.

Aus der nicht vorveröffentlichten dentschen Patentanmeldung P19524704.3 ist ein Dienst zum Übertragen von Videobilddaten eines Videofilms über ein diensteintegrierendes digitales Netz bekannt. In einem Video-Server sind mehrere Videofilme gespeichert, die nach Auswahl über Anforderungssignale von Bildtelefonen über eine Wählverbindung zu den jeweiligen Bildtelefonen übertragen werden. Die Kodierung der Videobilddaten der Videofilme ist vorgegeben. Der Dienst ist auf das Abrufen von Videofilmen als Sequenz von Videobildern beschränkt.

Es ist Aufgabe der Erfindung Videobilddaten flexibler zu übertragen.

Diese Aufgabe wird durch die Lehre des Anspruchs 1 gelöst. Vorteilhafte Ausgestaltungen sind den abhängigen Ansprüchen zu entnehmen.

Ein besonderer Vorteil der Erfindung ist, daß empfangene und abgespeicherte Standbilder weiterverarbeitbar sind, z.B. über ein Telefaxgerät ausdruckbar oder zu einem Bildtelefon übertragbar sind.

Ein weiterer Vorteil der Erfindung ist, daß bei einer Veränderung der Übertragungsqualität mittels der Anforderungssignale Kodierungsverfahren mit unterschiedlicher Auflösung auswählbar sind.

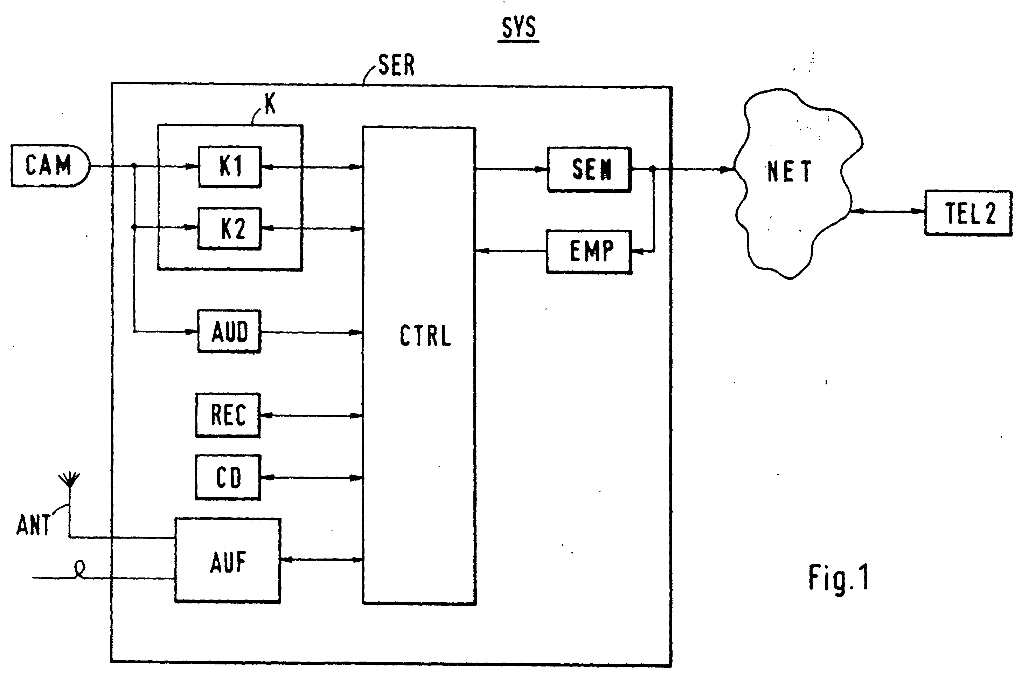

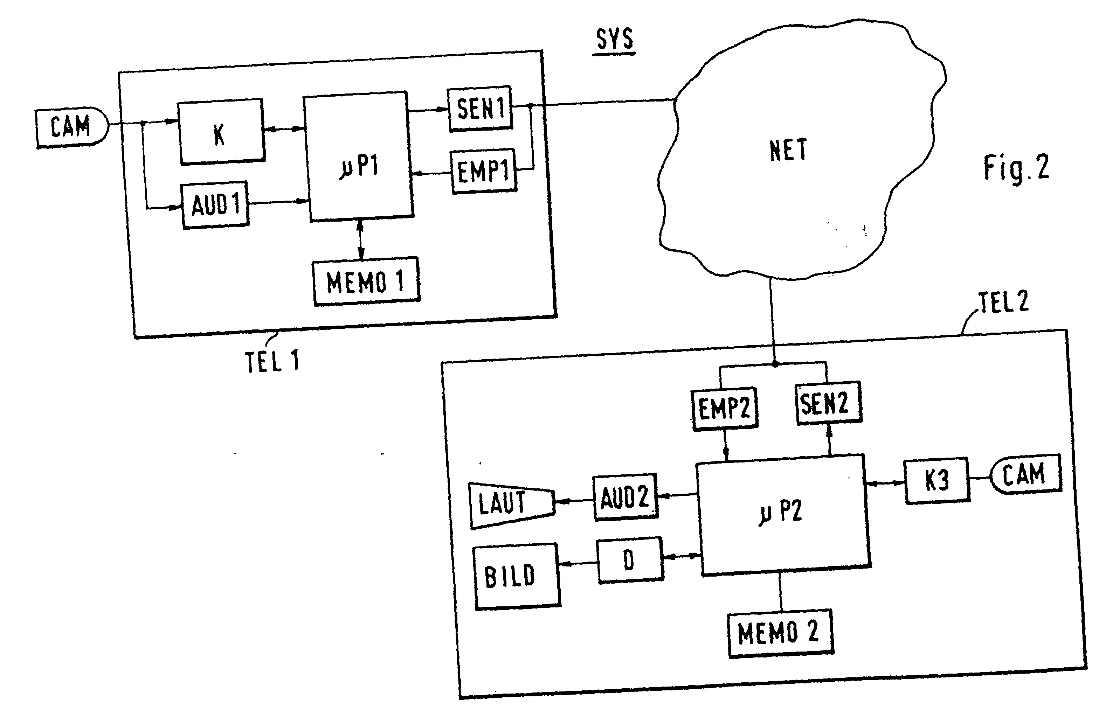

Im folgenden wird die Erfindung anhand zweier Ausführungsbeispiele unter Zuhilfenahme der Figuren 1 und 2 erläutert. Es zeigen:
- Fig. 1: eine schematische Darstellung eines ersten Ausführungsbeispiels eines erfindungsgemäßen Übertragungssystems, und
- Fig. 2: eine schematische Darstellung eines zweiten Ausführungsbeispiels eines erfindungsgemäßen Übertragungssystems.

Ein erstes Ausführungsbeispiel wird nun anhand der Fig. 1 beschrieben.

Fig. 1 zeigt ein erfindungsgemäßes Übertragungssystem SYS. Das Übertragungssystem SYS beinhaltet eine Einrichtung zur Übertragung von Videobilddaten, die als Server SER ausgeführt ist und über ein diensteintegrierendes digitales Netz NET, das sog. ISDN, mit einer Einrichtung zur Übertragung von Anforderungssignalen verbunden ist, die als Bildtelefon TEL2 ausgeführt ist.

Vom Bildtelefon TEL2 wird durch Anwahl des Servers SER eine Wählverbindung zum Server SER aufgebaut. Mittels Anforderungssignale, die vom Bildtelefon TEL2 über die Wählverbindung zum Server SER übertragen werden, werden im Server vorhandene Videobilddaten und/oder eine zugehörige Kodierungsart ausgewählt. Die ausgewählten Videobilddaten werden in Echtzeit über die Wählverbindung vom Server SER zum Bildtelefon TEL2 übertragen.

Der Server SER beinhaltet eine Sendeeinheit SEN, eine Empfangseinheit EMP, eine Kodiereinheit K und eine Steuereinheit CTRL. Die Sendeeinheit SEN dient der Übertragung ausgewählter Videobilddaten über eine Wählverbindung ins diensteintegrierende digitale Netz NET. Die Sendeeinheit SEN beinhaltet eine Einheit zur 2-Draht-4-Draht Wandlung und einen Verstärker.

Die Empfangseinheit EMP dient dem Empfang von Anforderungssignalen aus dem diensteintegrierenden digitalen Netz NET. Die Empfangseinheit EMP beinhaltet eine Einheit zur 4-Draht-2-Draht Wandlung, einen Verstärker und einen Echokompensator.

Die Kodiereinheit K beinhaltet für jede Wählverbindung zwei Kodierer. Die Kodiereinheit K beinhaltet somit beispielsweise 100 Kodierer, wovon zwei Kodierer K1, K2 in Fig. 1 dargestellt sind. Der Kodierer K1 dient der Kodierung von Videobilddaten einer Sequenz von Videobildern. Die Sequenz von Videobildern ist beispielsweise eine live ausgestrahlte Fernsehsendung. Im Kodierer K1 werden Videobilddaten nach dem Interframe-Verfahren kodiert. Beim Interframe-Verfahren wird die Korrelation zwischen zeitlich aufeinanderfolgenden Videobildern ausgenutzt. Der Kodierer K1 wird durch die Steuereinheit CTRL angesteuert. Er empfängt von einer Kamera CAM mit Mikrophon eine live aufgenommene Sequenz von Videobildern, kodiert diese nach dem Interframe-Verfahren und überträgt sie anschließend zur Steuereinheit CTRL. Ein entsprechender Kodierer ist z.B. aus DE 36 13 343 A1 bekannt.

Der Kodierer K2 dient der Kodierung von Videobilddaten von ausgewählten Einzelbildern. Im Kodierer K2 werden Videobilddaten nach dem Intraframe-Verfahren kodiert. Beim Intraframe-Verfahren wird die Korrelation der Videobilddaten innerhalb eines Videobildes ausgenutzt. Ein entsprechender Kodierer ist z.B. aus DE 36 13 343 A1 bekannt. Die zu erzielende Kompression der Datenrate ist beim Intraframe-Verfahren geringer als beim Interframe-Verfahren. Der Kodierer K2 wird durch die Steuereinheit angesteuert. Die Auflösung mit der der Kodierer K2 kodiert ist einstellbar. Er empfängt die gleichen Videobilddaten wie der Kodierer K1. Gesteuert durch die Steuereinheit CTRL kodiert der Kodierer K2 Videobilddaten einzelner ausgewählter Videobilder und überträgt diese zur Steuereinheit CTRL. Eines dieser ausgewählten Videobilder ist das Anfangsvideobild der zu übertragenden Sequenz, das zusätzlich zum Kodierer K1 übertragen wird, damit dieser das Interframe Verfahren starten kann.

Die Steuereinheit CTRL dient der Steuerung der Kodiereinheit K und der Sendeeinheit SEN, der Durchführung einer Zugangsberechtigungskontrolle für die empfangenen Anforderungssignale und der Auswahl der Kodierungsart in Abhängigkeit von den empfangenen Anforderungssignalen. Die Steuereinheit CTRL beinhaltet dazu einen Mikroprozessor oder einen digitalen Signalprozessor und einen Speicher. Der Server SER ist von mehreren Bildtelefonen aus gleichzeitig anwählbar. Um die angeforderten und ausgewählten Videobilddaten den mehreren Bildtelefonen gleichzeitig über mehrere Wählverbindungen zu übertragen, beinhaltet die Steuereinheit ferner mehrerer Schaltelemente und einen Zeitmultiplexer.

Der Server SER beinhaltet des weiteren eine Audioeinheit AUD, eine Videorekordereinheit REC, eine CD-Rekordereinheit CD und eine Aufbereitungseinheit AUF, die jeweils mit der Steuereinheit CTRL verbunden sind.

Die Audioeinheit AUD dient dazu die einer Sequenz von Videobildern zugehörigen Audiosignale zu kodieren und der Steuereinheit CTRL zuzuführen. Die Übertragung der Audiosignale erfolgt unabhängig von der Kodierungsart synchron zu der Sequenz der Videobilder. Dazu wird beispielsweise bei einer Wählverbindung mit zwei Nutzinformationskanälen der eine Nutzinformationskanal für die Übertragung der ausgewählten Videobilddaten und der andere Nutzinformationskanal zur Übertragung der Audiosignale verwendet.

Die Videorekordereinheit REC beinhaltet mehrere Videorekorder. In jeden Videorekorder kann eine Videokassette mit einem ausgewählten Videofilm eingelegt werden, der über eine Wählverbindung übertragen wird. Jeder Videorekorder wird von der Steuereinheit CTRL gesteuert.

Die CD-Rekordereinheit CD beinhaltet mehrere CD-Rekorder zum Abspielen von Compact Disc Read Only Memories, sog. CD-ROMs. Jeder CD-Rekorder wird von der Steuereinheit CTRL gesteuert, die ausgewählte CD-ROM wird über eine Wählverbindung übertragen. Auf den Videokassetten und den CD-ROMs sind beispielsweise Fernsehsendungen vom Vortag oder Videoclips gespeichert.

Die Aufbereitungseinheit AUF ist mit einer Antenne ANT und eine Übertragungsleitung, beispielsweise eine optische Glasfaserleitung oder eine Koaxialkabelleitung, verbunden, mittels derer jeweils Fernsehsendungen oder Videofilme empfangen werden können. Die Aufbereitungseinheit AUF wird von der Steuereinheit CTRL angesteuert und beinhaltet neben Verstärkern, einen optisch/elektrischen Umsetzer und Entzerrer, eine Kodiereinheit und eine Audioeinheit, die der bereits beschriebenen Kodiereinheit K und der beschriebenen Audioeinheit AUD entsprechen und die gleiche Funktion ausführen.

Im folgenden wird ein Beispiel der Übertragung von Videobilddaten und Anforderungssignalen zwischen Server SER und Bildtelefon TEL2 beschrieben.

Einem Kunden mit dem Bildtelefon TEL2 stehen bei einer Basisanschlußkonfiguration zwei Nutzinformationskanäle mit je 64 kbit/s, die sog. B-Kanäle, und einen Signalisierungskanal mit 16 kbit/s, den sog. D-Kanal, zur Übertragung und zum Empfang von Nutzinformationen zur Verfügung. Der Kunde wählt die Rufnummer des Servers SER. Eine Wählverbindung wird über den D-Kanal aufgebaut. Über die Steuereinheit CTRL wird ein Menue zum Bildtelefon übertragen. Der Kunde sendet Anforderungssignale in Form von Auswahlnummern, die den Angeboten im Menue entsprechen, über die aufgebaute Wählverbindung zum Server SER. Die Steuereinheit CTRL wertet die Anforderungssignale aus. Der Kundenwunsch ist beispielsweise die Fernsehsendung, die zur Zeit des Anrufs von der Kamera CAM live aufgenommen wird. Die Steuereinheit CTRL wählt zunächst den Kodierer K2 aus, um das Anfangsvideobild der ausgewählten Sequenz von Videobildern zu kodieren. Das kodierte Anfangsvideobild wird über die Steuereinheit CTRL und über die Wählverbindung in einem B-Kanal übertragen. Anschließend wird der Kodierer K1 von der Steuereinheit CTRL ausgewählt, um alle Folgebilder zu kodieren und über die Wählverbindung zum Bildtelefon TEL2 des Kunden zu übertragen. Interessiert sich der Kunde nun während der Übertragung der Sequenz von Videobildern für ein bestimmtes Videobild, so kann er durch eine weitere Auswahlnummer an einem von ihm zu bestimmenden Zeitpunkt das von ihm ausgewählte Videobild anfordern. Die Auswahlnummer wird in Form von Anforderungssignalen über die Wählverbindung zum Server SER übertragen. Die Steuereinheit CTRL wertet die Anforderungssignale aus und steuert daraufhin den Kodierer K2 derart, daß das ausgewählte Videobild mit einer höheren Auflösung kodiert wird. Das kodierte, ausgewählte Videobild benötigt eine höhere Übertragungskapazität. Da jedoch nur 64 kbit/s zur Verfügung stehen, wird das ausgewählte Videobild in der Steuereinheit in Teilbilder aufgeteilt, die sequentiell zum Bildtelefon TEL2 übertragen werden. Dadurch ist der Bildaufbau am Bildtelefon TEL2 langsamer. Der Kunde erhält jedoch ein Videobild mit einer höheren Bildqualität. Ein aktuelles Einzelbild aus der Sequenz der Videobilder wird somit als Standbild kodiert und übertragen.

Während der Übertragung des ausgewählten Videobildes werden die Audiosignale synchron zu der Sequenz der Videobilder übertragen. Damit kann der Kunde auch während der Ansicht des Standbildes die Fernsehsendung im Audiobereich weiterverfolgen. Das ausgewählte Standbild kann nun über eine weitere Auswahlnummer im Bildtelefon TEL2 abgespeichert und nach Beendigung der Wählverbindung über ein Telefaxgerät ausgedruckt werden oder fotographiert und beispielsweise als Pressefoto verwendet werden. Über eine weitere Auswahlnummer kann der Kunde die Fernsehsendung wieder live verfolgen. Dies erfolgt wie bereits oben beschrieben.

Ein zweites Ausführungsbeispiel wird nun anhand der Fig. 2 beschrieben. Fig. 2 zeigt ein erfindungsgemäßes Übertragungssystem SYS. Das Übertragungssystem SYS eine Einrichtung zur Übertragung von Videobilddaten, die als Bildtelefon TEL1 ausgeführt ist und über ein diensteintegrierendes Netz NET, das sog. ISDN, mit einer Einrichtung zur Übertragung von Anforderungssignalen, die als Bildtelefon TEL2 ausgeführt ist, verbunden ist. Das Bildtelefon TEL2 entspricht dem Bildtelefon aus Fig. 1.

Beide Bildtelefone TEL1, TEL2 sind zur Vereinfachung der Darstellung ohne die üblichen Komponenten, wie Echokompensator, Tastatur, Hörer und Display dargestellt. Mittels Anforderungssignal kann ein Kunde von Bildtelefon TEL2 aus im Bildtelefon TEL1 vorhandene Videobilddaten und/oder eine zugehörige Kodierungsart auswählen. Die ausgewählten Videobilddaten werden über eine Wählverbindung über das diensteintegrierende digitale Netz NET zum Bildtelefon TEL2 übertragen.

Das Bildtelefon TEL1 beinhaltet eine Steuereinheit, die als Mikroprozessor µP1 ausgeführt ist, eine Sendeeinheit SEN1, eine Empfangseinheit EMP1 und eine Kodiereinheit K.

Die Sendeeinrichtung SEN1 dient der Übertragung ausgewählter Videobilddaten über eine Wählverbindung ins diensteintegrierende digitale Netz NET.

Die Empfangseinrichtung EMP1 die dem Empfang von Anforderungssignalen aus dem diensteintegrierenden digitalen Netz NET.

Die Kodiereinheit K dient der Kodierung von zu übertragenden Videobilddaten auf zwei unterschiedliche Kodierungsarten. Die beiden Kodierungsarten unterscheiden sich dadurch, daß bei gleichem Kodierungsverfahren Videobilddaten mit unterschiedlichen Auflösungen kodierbar sind. Eine Sequenz von Videobildern wird mit einer niedrigen Auflösung kodiert und benötigt zur Übertragung eine geringe Übertragungskapazität. Ausgewählte Einzelbilder werden mit einer hohen Auflösung kodiert und benötigen zur Übertragung eine hohe Auflösung. Die Umschaltung zwischen den beiden Kodierungsarten erfolgt softwaregesteuert durch den Mikroprozessor µP1 ohne Unterbrechung der Wählverbindung.

Der Mikroprozessor µP1 dient der Steuerung der Kodiereinheit K und der Sendeeinheit SEN1 sowie der Auswahl der Kodierungsart und der Videobilddaten in Abhängigkeit von den Anforderungssignalen. Der Mikroprozessor µP1 ist mit einem Speicher MEMO1 verbunden. Im Speicher MEMO1 sind die Rufnummern der Kunden gespeichert, die eine Zugangsberechtigung zur Auswahl von Videobilddaten im Bildtelefon TEL1 haben. Wird das Bildtelefon TEL1 angewählt, so prüft der Mikroprozessor µP1, ob die rufende Rufnummer im Speicher MEMO abgespeichert ist oder nicht. Ist die Rufnummer abgespeichert und der Kunde damit zugangsberechtigt, so wird die Auswahl der Videobilddaten durchgeführt und die ausgewählten Videobilddaten werden übertragen. Ist die Rufnummer nicht im Speicher, die Zugangsberechtigungskontrolle also negativ, so erhält der Kunde eine telefonische Durchsage, daß er nicht zugangsberechtigt ist.

Das Bildtelefon TEL1 beinhaltet ferner eine Audioeinheit AUD1. Die Audioeinheit AUD1 dient dazu die einer Sequenz von Videobildern zugehörigen Audiosignale zu kodieren und dem Mikroprozessor µP1 zuzuführen. Die Übertragung der Audiosignale erfolgt unabhängig von der Kodierungsart synchron zu der Sequenz der Videobilder, beispielsweise werden die Sequenz im B1-Kanal und die Audiosignale im B2-Kanal eines Basisanschlusses übertragen.

Die Kodiereinheit K und die Audioeinheit AUD1 sind mit einer Kamera CAM verbunden, die beispielsweise eine Fernsehsendung live aufnimmt.

Das Bildtelefon TEL2 dient der Übertragung von Anforderungssignalen und dem Empfang von Videobilddaten und ist über das diensteintegrierende digitale Netz NET mit dem Bildtelefon TEL1 verbunden.

Das Bildtelefon TEL2 beinhaltet eine Sendeeinheit SEN2, eine Empfangseinheit EMP2, eine Steuereinheit, die als Mikroprozessor µP1 ausgeführt ist, und einen Speicher MEMO2, die vergleichbar den entsprechenden Elementen aus Bildtelefon TEL1 aufgebaut sind. Der Mikroprozessor µP2 ist über eine Dekodiereinheit D mit einem Bildschirm BILD und über eine Audioeinheit AUD2 mit einem Lautsprecher verbunden.

In der Audioeinheit AUD2 werden die empfangenen Audiosignale dekodiert und anschließend dem Lautsprecher zugeführt.

In der Dekodiereinheit D werden die empfangenen Videobilddaten dekodiert und anschließend auf dem Bildschirm dargestellt. Die Dekodiereinheit D ist softwaregesteuert durch den Mikroprozessor µP2 umschaltbar. Je nachdem mit welcher Kodierungsart die empfangenen Videobilddaten kodiert werden, müssen sie in der Dekodiereinheit D entsprechend dekodiert werden. Es gibt die Möglichkeit, daß bei der Übertragung der Videobilddaten ein Bit im Kopfteil die aktuelle Kodierungsart anzeigt oder die Dekodiereinheit D wird automatisch bei jeder übertragenen Auswahlnummer, die einen Wechsel der Kodierungsart anfordert, umgeschaltet.

Die Übertragung von Videobilddaten und Anforderungssignalen zwischen Bildtelefon TEL1 und Bildtelefon TEL2 erfolgt vergleichbar der Übertragung zwischen Server und Bildtelefon aus Fig. 1, so daß nicht näher darauf eingegangen wird.

Das Bildtelefon TEL2 beinhaltet ferner eine Kodiereinheit K3 und eine im Bildtelefon TEL2 integrierte Kamera CAM.

Die Kodiereinheit K3 ist vergleichbar der Kodiereinheit K des Bildtelefons TEL1.

Mit dem Kodierer K2, der von dem Mikroprozessor µP2 gesteuert wird, kann beispielsweise ein Einzelbild des Kunden kodiert werden. Dieses kodierte Einzelbild wird im Speicher MEMO2 abgespeichert. Bei der Bildtelefonie zwischen dem Kunden mit dem Bildtelefon TEL2 und einem Gesprächspartner mit einem Bildtelefon, kann der Kunde beispielsweise wählen, ob er nur das abgespeicherte Einzelbild zur Bildtelefonie nutzen will oder ob er die Live-Aufnahme der Kamera CAM als Sequenz von Videobilddaten übertragen will. Der Kunde kann auch während der Wählverbindung zwischen Einzelbild und Sequenz umschalten. Das abgespeicherte Einzelbild zeigt beispielsweise eine zu besprechende Schaltungsanordnung oder dergleichen. Die Übertragung der Audiosignale über die Audioeinheit AUD2 bleibt von der Umschaltung unbeeinflußt.

Bei den Ausführungsbeispielen können die Kodiereinheit und die Dekodiereinheit zwischen zwei Kodierungsarten bzw. zwei Dekodierungsarten umgeschaltet werden. Anstelle der Kodiereinheit mit zwei Kodierungsarten, kann die Erfindung auch bei einer Kodiereinheit, die zwischen mehr als zwei, beispielsweise vier Kodierungsarten umschaltbar ist, angewendet werden. Die erste Kodierungsart kodiert Videobilddaten beispielsweise derart, daß sie über eine 64 kbit/s-Leitung übertragen werden können. Die zweite Kodierungsart kodiert beispielsweise mit der doppelten Auflösung, so daß eine kodierte Sequenz von Videobildern über eine 128 kbit/s-Leitung übertragen werden kann. Die dritte Kodierungsart kodiert beispielsweise mit einer noch höheren Auflösung, so daß die kodierten Videobilddaten über eine 2 Mbit/s-Leitung übertragbar sind. Die vierte Kodierungsart kodiert beispielsweise Einzelbilder. Die Auflösung kann wahlweise eingestellt werden. Die Dekodiereinheit ist das Gegenstück zur Kodiereinheit und ist entsprechend aufgebaut. Es können aber auch Bildtelefone mit unterschiedlichen Dekodiereinheiten aufgebaut sein. Die Dekodiereinheit eines Bildtelefons kann beispielsweise über eine 64 kbit/s-Leitung übertragene, kodierte Videobilddaten und kodierte Einzelbilder dekodieren. Die Dekodiereinheit eines anderen Bildtelefons kann dafür über ein 2 Mbit/s-Leitung übertragene, kodierte Videobilddaten und kodierte Einzelbilder dekodieren. Beide Bildtelefone greifen auf den gleichen Server zu. Die Kodiereinheiten in den Bildtelefonen können auch unterschiedlich sein, vergleichbar zu den Dekodiereinheiten. Damit sind Bildtelefone mit unterschiedlichen Funktionsmerkmalen möglich.

Bei beiden Ausführungsbeispielen erfolgt die Auswahl der Kodierungs- und Dekodierungsart mittels Anforderungssignale, die vom Kunden über die Tastatur eingegeben werden. Anstelle manuell über die Tastatur, können die Anforderungssignale auch automatisch ausgewählt werden, beispielsweise über eine Meßeinheit in einem Bildtelefon, die die Übertragungsqualität mißt und daraus eine geeignete Kodierungs- und Dekodierungsart ableitet oder über eine Einheit zur Ermittlung der zur Verfügung stehenden Übertragungskapazität, woraus die geeignete Kodierungsart bestimmt wird. Damit erhalten die Bildtelefone ein weiteres Funktionsmerkmal.

## Patentansprüche

1. Einrichtung (SER, TEL1) zur Übertragung von Videobilddaten in ein Übertragungsnetz (NET), mit einer Sendeeinheit zur Übertragung der Videobilddaten über eine Wählverbindung, eine Empfangseinheit (EMP) zum Empfang von Anforderungssignalen aus dem Übertragungsnetz (NET), einer Kodiereinheit (K) zur Kodierung der zu übertragenden Videobilddaten auf wenigstens zwei unterschiedliche Kodierungsarten, **dadurch gekennzeichnet, dass** die Kodiereinheit (K) einen ersten Kodierer (K1) zur Kodierung von Videobilddaten einer Sequenz von Videobildern und einen zweiten Kodierer (K2) zur Kodierung von Videobilddaten von ausgewählten Einzelbildern beinhaltet, dass ein Speicher zur Speicherung mindestens eines, mit dem zweiten Kodierer (K2) kodierten Einzelbildes vorgesehen ist, und dass das mindestens eine abgespeicherte Einzelbild über die Wählverbindung übertragbar ist.

2. Einrichtung (SER, TEL1) noch Anspruch 1, **dadurch gekennzeichnet, dass** während der Wählverbindung zwischen abgespeichertem Einzelbild und der Sequenz von Videobildern umschaltbar ist, wobei das abgespeicherte Einzelbild in der Sequenz von Videobildern nicht enthalten ist.

3. Einrichtung (SER, TEL1) nach Anspruch 1, **dadurch gekennzeichnet, dass** die Sendeeinheit (SEN, SEN1) zur Übertragung von Audiosignalen dient, und dass die Übertragung der Audiosignale unabhängig von der Kodierungsart und unbeeinflusst von der Umschaltung erfolgt.

4. Einrichtung (SER, TEL1) nach Anspruch 1, **dadurch gekennzeichnet, dass** die Kodierung im ersten Kodierer (K1) nach dem Interframe-Verfahren und die Kodierung im zweiten Kodierer (K2) nach dem Intraframe-Verfahren erfolgt oder dass beide Kodierer (K1, K2) mit dem gleichen Kodierungsverfahren arbeiten, mit dem Unterschied, dass Videobilddaten im zweiten Kodierer (K2) mit einer höheren Auflösung kodiert werden.

5. Einrichtung (SER, TEL1) nach Anspruch 1, **dadurch gekennzeichnet, dass**, eine Steuereinheit (CTRL, µP1) vorgesehen ist, mittels derer in Abhängigkeit von den empfangenen Anforderungssignalen die Art der Kodierung auswählbar ist, und dass die Übertragung der zu übertragenden Videobilddaten bei jeder ausgewählten Kodierungsart mit der gleichen Datenrate erfolgt.

6. Einrichtung (SER, TEL1) nach Anspruch 5, **dadurch gekennzeichnet, dass** die Kodiereinheit (K) einen ersten Kodierer (K1) zur Kodierung von Videobuddaten und einen zweiten Kodierer (K2) zur Kodierung von Videobilddaten beinhaltet, wobei Videobilddaten im zweiten Kodierer (K2) mit einer höheren Auflösung kodiert werden als im ersten Kodierer (K1), und dass bei einer Auswahl des zweiten Kodierers (K2) die kodierten Videobilddaten in Teilbilder aufgeteilt und in Teilbildern übertragen werden.

7. Einrichtung (SER, TEL1) noch Anspruch 1, **dadurch gekennzeichnet, dass** die Kodiereinheit (K) mindestens drei Kodierer aufweist, die jeweils eine Kodierung angepasst an eine bestimmte Übertragungsleitung mit einer bestimmten Datenrate durchführen, wobei sich die Datenraten voneinander unterscheiden.

8. Einrichtung (SER, TEL1) nach Anspruch 7, **dadurch gekennzeichnet, dass** eine Datenrate 64 kbit/s oder 128 kbit/s beträgt und eine andere Datenrate 2 Mbit/s.

## Claims

1. Device (SER, TEL1) for transmitting video picture data in a transmission network (NET), comprising a transmitting unit for transmitting the video picture data via a dial-up connection, a receiving unit (EMP) for receiving request signals from the transmission network (NET), an encoding unit (K) for encoding the video picture data to be transmitted in at least two different types of encoding, **characterized in that** the encoding unit (K) comprises a first encoder (K1) for encoding video picture data of a sequence of video pictures and a second encoder (K2) for encoding video picture data of selected individual pictures, **in that** a memory is provided for storing at least one individual picture encoded with the second encoder (K2), and **in that** at least one stored individual picture can be transmitted via the dial-up connection.

2. Device (SER, TEL1) according to Claim 1, **characterized in that**, during the dial-up connection, switching is possible between stored individual picture and the sequence of video pictures, wherein the stored individual picture is not contained in the sequence of video pictures.

3. Device (SER, TEL1) according to Claim 1, **characterized in that** the transmitting unit (SEN, SEN1) serves to transmit audio signals and **in that** the audio signals are transmitted independently of the type of encoding and unaffected by the switching.

4. Device (SER, TEL1) according to Claim 1, **characterized in that** the encoding in the first encoder (K1) takes place by the interframe method and the encoding in the second encoder (K2) takes place by the intraframe method or **in that** both encoders (K1, K2) employ the same encoding method, with the difference that the video picture data are encoded in the second encoder (K2) with a higher resolution.

5. Device (SER, TEL1) according to Claim 1, **characterized in that** a control unit (CTRL, µP1) is provided by means of which, depending on the received request signals, the type of encoding can be selected and **in that** the video picture data to be transmitted are transmitted at the same data rate for every type of encoding selected.

6. Device (SER, TEL1) according to Claim 5, **characterized in that** the encoding unit (K) comprises a first encoder (K1) for encoding video picture data and a second encoder (K2) for encoding video picture data, wherein video picture data are encoded in the second encoder (K2) with a higher resolution than in the first encoder (K1) and **in that**, if the second encoder (K2) is selected, the encoded video picture data are divided up into component pictures and transmitted in component pictures.

7. Device (SER, TEL1) according to Claim 1, **characterized in that** the encoding unit (K) has at least three encoders that each perform an encoding adapted to a particular transmission line having a certain data rate, wherein the data rates are different from one another.

8. Device (SER, TEL1) according to Claim 7, **characterized in that** one data rate is 64 kbit/s or 128 kbit/s and another data rate is 2 Mbit/s.

## Revendications

1. Dispositif (SER, TEL1) pour la transmission de données d'image vidéo dans un réseau de transmission (NET), comprenant une unité d'émission pour la transmission des données d'image vidéo par l'intermédiaire d'une liaison d'appel, une unité de réception (EMP) destinée à la réception de signaux de requête en provenance du réseau de transmission (NET), et une unité de codage (K) destinée à coder les données d'image vidéo à transmettre, selon au moins deux types de codage,
**caractérisé en ce que** l'unité de codage (K) renferme un premier codeur (K1) pour coder des données d'image vidéo d'une séquence d'images vidéo, et un second codeur (K2) pour coder des données d'image vidéo d'image individuelles sélectionnées, **en ce qu'**il est prévu une mémoire pour la mémorisation d'au moins une image individuelle codée à l'aide du second codeur (K2), et **en ce qu'**au moins une image individuelle mémorisée peut être transmise par l'intermédiaire de la liaison d'appel.

2. Dispositif (SER, TEL1) selon la revendication 1, **caractérisé en ce que** durant la liaison d'appel, il est possible de commuter entre l'image individuelle mémorisée et la séquence d'images vidéo, l'image individuelle mémorisée n'étant pas contenue dans la séquence d'images vidéo.

3. Dispositif (SER, TEL1) selon la revendication 1, **caractérisé en ce que** l'unité d'émission (SEN, SEN1) sert à la transmission de signaux audio, et **en ce que** la transmission des signaux audio s'effectue indépendamment du type de codage et sans être influencée par la commutation.

4. Dispositif (SER, TEL1) selon la revendication 1, **caractérisé en ce que** le codage dans le premier codeur (K1) s'effectue selon le procédé interframe (inter-trame) et le codage dans le second codeur (K2) selon le procédé intraframe (intra-trame), ou bien **en ce que** les deux codeurs (K1, K2) travaillent avec le même procédé de codage, avec la différence suivante, à savoir que des données d'image vidéo sont codées avec une résolution plus grande dans le second codeur (K2).

5. Dispositif (SER, TEL1) selon la revendication 1, **caractérisé en ce qu'**il est prévu une unité de commande (CTRL, µP1) à l'aide de laquelle il est possible de sélectionner le type de codage en fonction des signaux de requête reçus, et **en ce que** la transmission des données d'image vidéo à transmettre s'effectue pour chaque type de codage sélectionné avec le même taux de transmission de données.

6. Dispositif (SER, TEL1) selon la revendication 5, **caractérisé en ce que** l'unité de codage (K) renferme un premier codeur (K1) pour coder des données d'image vidéo et un second codeur (K2) pour coder des données d'image vidéo, les données d'image vidéo étant codées dans le second codeur (K2) avec une résolution plus élevée que dans le premier codeur vidéo (K1), et **en ce que** lors d'une sélection du second codeur (K2) les données d'image vidéo sont subdivisées en images partielles et transmises en tant qu'images partielles.

7. Dispositif (SER, TEL1) selon la revendication 1, **caractérisé en ce que** l'unité de codage (K) comprend au moins trois codeurs, qui effectuent chacun un codage adapté à une ligne de transmission déterminée avec un taux de transmission de données déterminé, les taux de transmission de données étant différents les uns des autres.

8. Dispositif (SER, TEL1) selon la revendication 7, **caractérisé en ce qu'**un taux de transmission de données est de 64 kbit/s ou 128 kbit/s, et l'autre taux de transmission de données est de 2 Mbit/s.
